**Europäisches Patentamt**

**European Patent Office**

**Office européen des brevets**

(19)

(11) Veröffentlichungsnummer: **0 348 760**
**A2**

# (12) EUROPÄISCHE PATENTANMELDUNG

(21) Anmeldenummer: 89111024.9

(22) Anmeldetag: 17.06.89

(51) Int. Cl.⁴: **B29C 51/00 , C08G 18/75 ,**
**C08G 18/65 , C08G 18/32 ,**
**C08G 18/48 , C08J 5/12 ,**
**B32B 27/00**

(30) Priorität: 01.07.88 DE 3822331

(43) Veröffentlichungstag der Anmeldung:
**03.01.90 Patentblatt 90/01**

(84) Benannte Vertragsstaaten:
**BE DE ES FR GB IT**

(71) Anmelder: **BAYER AG**

**D-5090 Leverkusen 1 Bayerwerk(DE)**

(72) Erfinder: **Wagner, Joachim, Dr.**
**Semmelweisstrasse 135**
**D-5000 Köln 80(DE)**
Erfinder: **Rasshofer, Werner, Dr.**
**Leopold-Gmelin-Strasse 31**
**D-5000 Köln 80(DE)**

(54) **Verfahren zur Herstellung von Formkörpern und die nach diesem Verfahren erhaltenen Formkörper.**

(57) Ein Verfahren zur Herstellung von Formkörpern oder Folien auf Basis von Polyisocyanat-Polyadditionsprodukten einer Dichte von mindestens 0,8 g/cm³ durch thermoplastische Formgebung bei oberhalb 20°C liegenden Temperaturen und bei oberhalb 1 bar liegenden Drücken, wobei man als Polyisocyanat-Polyadditionsprodukte solche auf Basis von

    a) (cyclo)aliphatischen Polyisocyanaten,

    b) Verbindungen des Molekulargewichtsbereichs 1.800 bis 12.000, welche im statistischen Mittel mindestens 2,5 gegenüber Isocyanatgruppen reaktionsfähige Gruppen aufweisen, gegebenenfalls

    c) aromatischen Diaminen des Molekulargewichtsbereichs 108 bis 400, sowie gegebenenfalls

    d) gegebenenfalls Ethergruppen aufweisenden (Cyclo)-alkanpolyolen und/oder (Cyclo)-alkanpolyaminen des Molekulargewichtsbereichs 60 bis 1799, sowie gegebenenfalls unter Mitverwendung von

    e) den aus der Polyurethanchemie an sich bekannten Hilfs- und Zusatzmitteln, verwendet, wobei die Formkörper unter Einhaltung einer Isocyanatkennzahl von 60 bis 140 hergestellt werden, und wobei mindestens eine der Komponenten c) und/oder d) in einer solchen Menge mitverwendet wird, daß die Gesamtmenge der Komponenten c) und/oder d) mindestens 5 Gew.-%, bezogen auf das Gewicht der Komponente b), beträgt.

EP 0 348 760 A2

## Verfahren zur Herstellung von Formkörpern und die nach diesem Verfahren erhaltenen Formkörper

Die vorliegende Erfindung betrifft ein Verfahren zur Herstellung von Formkörpern oder von Folien auf Basis von Harnstoffgruppen und gegebenenfalls Urethangruppen aufweisenden Polyisocyanat-Polyadditionsprodukten durch thermoplastische Formgebung, wobei als Polyisocyanat-Polyadditionsprodukte solche auf Basis von höherfunktionellen Verbindungen mit gegenüber Isocyanatgruppen reaktionsfähigen Wasserstoffatomen und (cyclo)aliphatischen Polyisocyanaten mit einem hohen Harnstoffgehalt verwendet werden. Gemäß einer besonderen Variante des Verfahrens dient dieses der Herstellung von Verbundkörpern durch thermoplastische Formgebung eines Aufbaus, bestehend aus mindestens zwei flächenförmigen, schichtweise übereinanderliegenden, thermoplastisch verformbaren Kunststoffmaterialien und gegebenenfalls verstärkend wirkenden Unter-, Ober- und/oder Zwischenschichten, wobei die Kunststoffmaterialien zumindest teilweise aus Polyisocyanat-Polyadditionsprodukten der genannten Art bestehen.

Thermoplastische Polyurethanelastomere sind bekannt (vgl. z.B. Becker/Braun, Kunststoffhandbuch, Band 7, "Polyurethane", Carl Hanser Verlag, München/Wien (1983), Seiten 428 ff.). Bei den bislang bekannt gewordenen, thermoplastisch verarbeitbaren Polyurethanelastomeren handelt es sich um solche auf Basis von Diisocyanaten, höhermolekularen Dihydroxyverbindungen, insbesondere höhermolekularen Polyesterdiolen und niedermolekularen Diolen als Kettenverlängerungsmittel, wobei die Polyurethane möglichst linear aufgebaut, d.h. keine Vernetzungs- bzw. Verzweigungsstellen im Molekül aufweisen sollten. Auch von der Mitverwendung von Diaminen als Kettenverlängerungsmittel bei der Herstellung von thermoplastisch verarbeitbaren Polyurethanelastomeren hat man bislang abgeraten (vgl. das oben zitierte Handbuch, Seite 428, Absatz 8.2.1), da durch die Mitverwendung von Diamin-Kettenverlängerungsmittel Harnstoffgruppen in das Molekül eingebaut werden, die als Hartsegmente angesehen werden, die einer thermoplastischen Verarbeitbarkeit entgegenstehen. Die DE-OS 2 164 381 beschreibt die Herstellung von harten Polyurethankunststoffen, die thermoplastisch verformbar sind, wobei auch höher als difunktionelle Ausgangsmaterialien zum Einsatz gelangen können, allerdings mit der Empfehlung, nicht über 50 Gew.-% an tri- und/oder höherfunktionellen Polyhydroxylverbindungen, bezogen auf die difunktionellen Hydroxylverbindungen, mitzuverwenden. Im übrigen ist das Verfahren dieser Vorveröffentlichung auf die zwingende Mitverwendung von Fasern als verstärkend wirkende Füllstoffe angewiesen, wobei Harnstoffgruppen aufweisende Polyure thane, in denen ein Molverhältnis von Harnstoffgruppen zu Urethangruppen von mindestens 2:1 vorliegt, und wie sie erfindungsgemäß bevorzugt verwendet werden, überhaupt nicht angesprochen werden.

Jetzt wurde jedoch überraschenderweise gefunden, daß auch Harnstoffgruppen aufweisene Polyadditionsprodukte von aliphatischen Polyisocyanaten, in denen die Anzahl der Harnstoffgrupen die Anzahl der Urethangruppen übersteigt, und die zudem unter Mitverwendung von verzweigten, höhermolekularen Aufbaukomponenten mit gegenüber Isocyanatgruppen reaktionsfähigen Gruppen hergestellt worden sind, thermoplastisch verarbeitbar sind und insbesondere auch zur Herstellung von Verbundkörpern unter thermoplastischer Formgebung geeignet sind.

Außerdem wurde gefunden, daß die guten mechanischen Eigenschaften dieser Polyisocyanat-Polyadditionsprodukte durch die thermoplastische Formgebung nicht negativ beeinflußt werden und zwar weitgehend unabhängig davon, ob die Polyisocyanat-Polyadditionsprodukte Füll- und/oder Verstärkungsstoffe enthalten.

Gegenstand der Erfindung ist ein Verfahren zur Herstellung von Formkörpern oder Folien auf Basis von Polyisocyanat-Polyadditionsprodukten einer Dichte von mindestens 0,8 g/cm$^3$ durch thermoplastische Formgebung bei oberhalb 20°C liegenden Temperaturen und bei oberhalb 1 bar liegenden Drücken, dadurch gekennzeichnet, daß man als Polyisocyanat-Polyadditionsprodukte solche verwendet, die durch Umsetzung von

a) (cyclo)aliphatischen Polyisocyanaten,

b) Verbindungen mit einem Molekulargewicht von 1.800 bis 12.000, welche im statistischen Mittel mindestens 2,5 gegenüber Isocyanatgruppen reaktionsfähigen Gruppen aufweisen, gegebenenfalls

c) Diaminen mit zwei primären und/oder sekundären, aromatisch gebundenen Aminogruppen des Molekulargewichtsbereichs 108 bis 400,

sowie gegebenenfalls

d) gegebenenfalls Ethergruppen aufweisenden (Cyclo)alkanpolyolen und/oder (Cyclo)-alkanpolyaminen des Molekulargewichtsbereichs 60 bis 1799,

sowie gegebenenfalls unter Mitverwendung von

e) den aus der Polyurethanchemie an sich bekannten Hilfs-und Zusatzmitteln,

unter Einhaltung einer Isocyanatkennzahl von 60 bis 140 im Ein- oder Mehrstufenverfahren hergestellt

2

worden sind mit der Maßgabe, daß mindestens eine der Komponenten c) und/oder d) in einer solchen Menge mitverwendet wird, daß die Gesamtmenge der Komponenten c) und/oder d) mindestens 5 Gew.-% bezogen auf das Gewicht der Komponente b), beträgt.

Bei den beim erfindungsgemäßen Verfahren einzusetzenden Polyisocyanat-Polyadditionsprodukten handelt es sich um Elastomere des bevorzugten Dichtebereichs von 0,8 bis 1,4 g/cm³. Der besonders bevorzugte Dichtebereich liegt bei 1,0 bis 1,3 g/cm³. Derartige Elastomere können in Analogie zu den beispielsweise in DE-AS 2 622 951, DE-OS 3 133 859, US-PS 4 065 410, US-PS 4 218 543 oder EP-B-00 81 701 konkret beschriebenen Verfahren nach der Reaktionsspritzgußtechnik in geschlossenen Formen hergestellt werden, wobei erfindungsgemäß jedoch solche Elastomere verwendet werden, deren Polyisocyanatkomponente ausschließlich aus Polyisocyanaten mit (cyclo)aliphatisch gebundenen Isocyanatgruppen besteht.

Nach allen bislang vorliegenden Erfahrungen mußte davon ausgegangen werden, daß derartige Elastomere und insbesondere die erfindungsgemäß bevorzugten mit eingebauten Harnstoffgruppen in hoher Konzentration nicht thermoplastisch verarbeitbar sein würden, so daß ihre Herstellung in geschlossenen Formen erfolgen muß, deren Formgestaltung dem angestrebten Endprodukte (z.B. Automobilstoßstangen-Form) entspricht. Überraschenderweise ist dies jedoch nicht der Fall, da die Formgebung auch durch thermoplastische Verarbeitung erfolgen kann.

Zur Herstellung der Polyisocyanat-Polyadditionsprodukte geeignete (cyclo)aliphatische Polyisocyanate a) sind beliebige organische Diisocyanate eines über 137, vorzugsweise bei 168 bis 290 liegenden Molekulargewichts mit ausschließlich (cyclo)aliphatisch gebundenen Isocyanat gruppen wie beispielsweise 1,6-Diisocyanatohexan, 1,12-Diisocyanatododecan, 1,3-Diisocyanatocyclobutan, 1,3-und 1,4-Diisocyanato-cyclohexan, sowie beliebige Gemische dieser Isomeren, 1-Isocyanato-3,3,5-trimethyl-5-isocyanatomethyl-cyclohexan (IPDI), 2,4- und/oder 4,4'-Diisocyanatodicyclohexylmethan oder beliebige Gemische derartiger einfacher (cyclo)aliphatischer Polyisocyanate. Ebenfalls geeignet sind durch Urethan-, Allophanat-, Isocyanurat-, Harnstoff-, Biuret- und/oder Uretdiongruppen modifizierte Polyisocyanate auf Basis der beispielhaft genannten (cyclo)aliphatischen Diisocyanate oder auf Basis von deren Gemischen. Gemische von unmodifizierten Diisocyanaten mit den genannten Modifizierten Polyisocyanaten können ebenfalls als Komponente a) verwendet werden.

Bei der Komponente b) handelt es sich um Verbindungen mit gegenüber Isocyanatgruppen reaktionsfähigen Gruppen des Molekulargewichtsbereichs 1.800 bis 12.000, vorzugsweise 3.000 bis 7.000 oder um Gemische derartiger Verbindungen, wobei die Komponente b) im Sinne der Isocyanat-Additionsreaktion eine über 2,5, vorzugsweise bei 2,6 bis 3,0 und besonders bevorzugt bei 2,8 bis 3,0, liegende (mittlere) Funktionalität aufweist. Besonders gut als Komponente b) geeignete Verbindungen sind, diesen Ausführungen entsprechende, Polyetherpolyole bzw. Gemische von Polyetherpolyolen wie sie in DE-AS 2 622 951, Kolonne 6, Zeile 65 - Kolonne 7, Zeile 47, offenbart sind, wobei auch erfindungsgemäß solche Polyetherpolyole bevorzugt sind, deren Hydroxylgruppen zumindest zu 50 %, vorzugsweise zumindest zu 80 %, aus primären Hydroxylgruppen bestehen. Auch die in DE-AS 2 622 951 beispielhaft offenbarten, Hydroxylgruppen aufweisenden Polyester, Polythioether, Polyacetale, Polycarbonate oder Polyesteramide sind im Prinzip als erfindungsgemäße Komponente b) geeignet, sofern sie den obern gemachten Ausführungen entsprechen, jedoch gegenüber den Polyetherpolyolen weniger bevorzugt.

Als Ausgangskomponente b) ebenfalls gut geeignet sind, obigen Ausführungen entsprechende, Aminopolyether oder Gemische von Aminopolyethern, d.h., Polyether mit gegenüber Isocyanatgruppen reaktionsfähigen Gruppen, die sich zumindest zu 50 Äquivalent-%, vorzugsweise zumindest zu 80 Äquivalent-%, aus primären und/oder sekundären, aromatisch oder aliphatisch, vorzugsweise aromatisch gebundenen Aminogruppen und zum Rest aus primären und/oder sekundären, aliphatisch gebundenen Hydroxylgruppen zusammensetzen. Geeignete derartige Aminopolyether sind beispielsweise die in EP-B-00 81 701, Kolonne 4, Zeile 26 bis Kolonne 5, Zeile 40, genannten Verbindungen. Ebenfalls als Ausgangskomponente b) geeignet, jedoch weniger bevorzugt, sind Aminogruppen aufweisende Polyester des obengenannten Molekulargewichtsbereichs.

Als Komponente b) können selbstverständlich auch beliebige Gemische der beispielhaft genannten Polyhydroylverbindungen mit den beispielhaft genannten Aminopolyethern verwendet werden.

Die Komponente b) wird im allgemeinen in einer Menge von mindestens 30 Gew.-%, vorzugsweise mindestens 40 Gew.-%, bezogen auf das Gesamtgewicht der Komponenten a), b), c) und d) eingesetzt.

Bei der gegebenenfalls mitzuverwendenden Komponente c) handelt es sich um aromatische Diamine der in EP-B-00 81 701, Kolonne 5, Zeile 58 bis Kolonne 6, Zeile 34, beispielhaft genannten Art, wobei auch erfindungsgemäß die dort als bevorzugt herausgestellten Diamine bevorzugt sind.

Bei den gegebenenfalls als weitere Aufbaukomponenten d) mitzuverwendenden Polyolen oder Polyaminen handelt es sich um beliebige nicht-aromatische Verbindungen mit mindestens zwei gegenüber Isocyanatgruppen reaktionsfähigen Gruppen des Molekulargewichtsbereichs 60 bis 1799, vorzugsweise 62 bis 500, insbesondere 62 bis 400. In Betracht kommen beispielsweise mehrwertige Alkohole wie sie in EP-B-00 81 701, Kolonne 9, Zeilen 32 bis 50, offenbart sind. Ferner in Betracht kommen beispielsweise auch Ethergruppen aufweisende aliphatische Polyamine, beispielsweise endständige primäre Aminogruppen aufweisende Polypropylenoxide des genanten Molekulargewichtsbereichs. In Betracht kommen auch cycloaliphatische Ringe aufweisende Polyole wie beispielsweise 1,4-Dihydroxycyclohexan oder 1,4-Bis-hydroxymethyl-cyclohexan und Polyamine wie beispielsweise 1,4-Cyclohexan-diamin, Isophorondiamin, Bis-(4-aminocyclohexyl)-methan, Bis-(3-methyl-4-aminocyclohexyl)-methan.

Es ist ein wesentlicher Punkt, daß bei der Herstellung der Elastomeren mindestens eine der Komponenten c) oder d) zur Anwendung gelangt und zwar in solchen Mengen, daß der Gewichtsanteil der Komponenten c) und/oder d), bezogen auf das gewicht der Komponente b), mindestens 5 Gew.-%, vorzugsweise mindestens 10 Gew.-%, beträgt. Besonders bevorzugt werden die Elastomeren unter alleiniger Verwendung von (cyclo)aliphatischen Polyaminen oder Polyolen der unter d) genannten Art hergestellt, wobei deren Menge und die Menge der in der Komponente b) gegebenenfalls vorliegenden Aminogruppen so bemessen wird, daß in den Elastomeren das Molverhältnis von eingebauten Harnstoffgruppen zu eingebauten Urethangruppen bei mindestens 2:1 liegt.

Bei den bei der Herstellung der Polyisocyanat-Polyadditionsprodukte gegebenenfalls mitzuverwendenden Hilfs-und Zusatzmitteln e) handelt es sich beispielsweise um innere Formtrennmittel, Katalysatoren für die Polyisocyanat-Polyadditionsreaktion, Treibmittel, oberflächenaktive Zusatzstoffe, Zellregler, Pigmente, Farbstoffe, UV-Stabilisatoren, Weichmacher oder fungistatisch bzw. bakteriostatisch wirkende Substanzen, wie sie beispielsweise in EP-B-00 81 701, Kolonne 6, Zeile 40 bis Kolonne 9, Zeile 31, beispielhaft beschreiben sind.

Zu den bevorzugten, gegebenenfalls mitzuverwendenden Hilfs- und Zusatzstoffen gehören die an sich bekannten Füll- und/oder Verstärkungsstoffe wie beispielsweise Bariumsulfat, Kieselgur, Schlämmkreide, Mica oder insbesondere Glasfasern, LC-Fasern, Glasflakes, Glaskugeln, Aramid- oder Kohlefasern, wobei diese Füll- und/oder Verstärkungsstoffe in Mengen von bis zu 80 Gew.-%, vorzugsweise bis zu 30 Gew.-% bezogen auf das Gesamtgewicht der gefüllten bzw. verstärkten Polyisocyanat-Polyadditionsprodukte mitverwendet werden können.

Die Herstellung der Polyisocyanat-Polyadditionsprodukte erfolgt vorzugsweise nach dem Einstufen-Verfahren dergestalt, daß man die Polyisocyanatkomponente a) mit einem Gemisch der Komponenten b) bis e) unter Verwendung geeigneter Mischapparaturen vermischt und zur Reaktion bringt. Grundsätzlich ist es auch möglich, die Polyisocyanat-Polyadditionsprodukte nach einem "modifizierten Einstufenverfahren" umzusetzen, gemäß welchem man die Polyisocyanat-Komponente a) mit einem Teil der Komponente b) und gegebenenfalls der Komponente d) unter Bildung von NCO-Semiprepolymeren umsetzt, welche anschließend einstufig mit dem Gemisch der restlichen Komponenten zur Reaktion gebracht werden. Auch die Herstellung der Elastomeren nach dem klassischen Prepolymerverfahren ist prinzipiell denkbar. In allen Fällen liegt die NCO-Kennzahl (Anzahl der NCO-Gruppen dividiert durch die Anzahl an NCO-reaktion Gruppen, multipliziert mit 100) bei 60 bis 140, vorzugsweise bei 80 bis 120, insbesondere 95 bis 115.

Wie bereits oben ausgeführt, wird vorzugsweise die Komponente d) (unter Einbeziehung der gegebenenfalls in der Komponente b) vorliegenden Aminogruppen) so bemessen, daß in den Elastomeren das Molverhältnis von Harnstoffgruppen zur Urethangruppen bei mindestens 2:1 liegt. Besonders bevorzugt liegt dieses Verhältnis bei mindestens 5:1. In der Praxis bedeutet dies, daß vorzugsweise die Komponente d) in einer Menge von 5 bis 50, vorzugsweise 10 bis 40 Gew.-%, bezogen auf das Gewicht der Komponente b), eingesetzt wird.

Die Herstellung der Polyisocyanat-Polyadditionsprodukte kann beispielsweise in Analogie zu der in DE-AS 2 622, 951, US-PS 4 218 543 oder EP-B-00 81 701 beschriebenen Verfahrensweise, d.h., nach dem Verfahren der Reaktionsspritzgußtechnik in geschlossenen Formen, erfolgen, jedoch ist es auch möglich, die Polyisocyanat-Polyadditionsprodukte ohne Formen herzustellen, beispielsweise dergestalt, daß man das die Mischapparatur verlassende Reaktionsgemisch auf geeignete Unterlagen, beispielsweise Bleche, aufträgt und dort ausreagieren läßt.

Vorzugsweise handelt es sich bei den bei dem erfindungsgemäßen Verfahren eingesetzten Polyisocyanat-Polyadditionsprodukten um nach dem Verfahren der Reaktionsspritzgußtechnik in geschlossene Formen hergestellte Formkörper oder um aus solchen Formkörpern erhaltene Teile, Klein- oder Kleinstteile. Die dem erfindungsgemäßen Verfahren zuzuführenden Polyisocyanat-Polyadditionsprodukte sind im übrigen unschmelzbar und können daher im allgemeinen nicht in üblichen Extrudern verarbeitet werden. Unter "thermoplastischer Formgebung" ist daher vor allem eine Arbeitsweise zu verstehen, die sich den Umstand zunutze macht, daß die Polyisocyanat-Polyadditionsprodukte unter den hier genannten Temperatur- und Druckbedingungen so weit erweichen, daß sie in üblichen Formpressen verformt werden können.

Die Polyisocyanat-Polyadditionsprodukte weisen vorzugsweise eine Dichte von 0,8 bis 1,4, insbesondere 1,0 bis 1,3 g/cm³, auf. Dies bedeutet, daß die Mitverwendung von Treibmitteln allenfalls in geringen Mengen erfolgt, um eine gewisse mikroporöse Struktur zu erhalten oder um die Verarbeitbarkeit der Reaktionsgemische zu erleichtern (verbesserte Fließfähigkeit).

Unter "thermoplastische Formgebung" im Sinne des erfindungsgemäßen Verfahrens sind beliebige, an sich bekannte, Techniken zu verstehen, bei denen unter der Einwirkung von höheren Temperaturen und Drücken die ursprüngliche Formgestalt des als Ausgangsmaterial eingesetzten Polyisocyanat-Polyadditionsprodukts verändert wird oder bei denen noch nicht geformte, beispielsweise als Granulat, Schnipsel, Streifen oder sonstigen Klein- oder Kleinstteilen vorliegende Polyisocyanat-Polyadditionsprodukte unter der Einwirkung von höheren Temperaturen und Drücken in einheitliche Formkörper überführt werden. Der Begriff umfaßt ferner eine Arbeitsweise, bei welcher unter Verwendung von flächenförmig vorliegenden Polyisocyanat-Polyadditionsprodukten der erfindungswesentlichen Art, gegebenenfalls unter Mitverwendung von anderen, thermoplastisch verarbeitbaren Kunststoffen und/oder gegebenenfalls unter Mitverwendung von verstärkend wirkenden oder sonstigen, z.B. dekorativen Ober-, Unter-und/oder Zwischenschichten aus Verstärkungs- oder Füllstoffmaterial ein Aufbau hergestellt wird, der dann unter der Einwirkung von erhöhten Temperaturen und Drücken thermoplastisch zu einem Formkörper, beispielsweise zu einem Laminat, verpreßt wird.

Bei der Durchführung des erfindungsgemäßen Verfahrens nach der erstgenannten Variante (Änderung der Form eines bereits geformt vorliegenden Polyisocyanat-Polyadditionsproduktes bzw. Herstellung eines Formkörpers aus einem ungeformten Polyisocyanat-Polyadditionsprodukt) kann die thermoplastische Verarbeitung unter Verwendung beliebiger, hierfür geeigneter, bekannter Apparaturen wei beispielsweise Extrudern oder Pressen erfolgen.

Zur erfindungsgemäßen thermoplastischen Formgebung sind hierbei die Polyisocyanat-Polyadditionsprodukte in der unterschiedlichsten Ausgangsformen geeignet. So ist es beispielsweise möglich, Platten, die nach dem Prinzip der Reaktionsspritzgußtechnik in geschlossenen Plattenformen hergestellt worden sind, in Tiefziehpressen weiter zu verformen oder in zerkleinerter Form (Granulate, Streifen oder Pulver) thermoplastisch zu neuen Formkörpern zu verarbeiten. Dies gilt selbstverständlich auch für die ohne Verwendung von Formen hergestellten Polyisocyanat-Polyadditionsprodukte. Ebenfalls können plattenförmig vorliegende Polyisocyanat-Polyadditionsprodukte zu Folien beliebiger Dicke weiterverarbeitet werden.

Die erfindungsgemäß aufgefundenen Möglichkeiten, die genannten Polyisocyanat-Polyadditionsprodukte thermoplastisch zu verformen, gestatten insbesondere auch die Herstellung von Formkörpern aus Granulaten, Schnipseln, Steifen und/oder anderen Klein- und Kleinstteilen, wie sie beispielsweise bei der bislang erfolgten Herstellung und Verwendung von Formkörpern auf Basis der Polyisocyanat-Polyadditionsprodukten als Nebenprodukte bzw. Abfall (z.B. Austrieb, Anguß) anfielen und bislang verbrannt wurden.

Die thermoplastische Verarbeitung der Polyisocyanat-Polyadditionsprodukte erfolgt im allgemeinen bei einem Druck von über 1 bar, vorzugsweise innerhalb des Druckbereichs von 20 bis 400 bar, insbesondere 100 bis 200 bar, bei einer Temperatur von über 20°C, vorzugsweise 100 bis 200°C und insbesondere 130 bis 170°C, wobei die Verformungszeiten bei 1 Sekunde bis 10 Minuten liegen können. Selbstverständlich müssen bei ein und demselben Elastomeren bei niederen Drucken innerhalb der genannten Bereiche höhere Temperaturen innerhalb der genannten Bereiche und umgekehrt zur Anwendung gelangen.

Bei der obengenannten Variante des erfindungsgemäßen Verfahrens zur Herstellung eines Verbundkörpers wird zunächst ein "Aufbau" hergestellt, der aus mindestens 2, vorzugsweise 2 bis 8 und besonders bevorzugt 2 bis 4, schichtweise übereinanderliegenden, thermoplastisch verformbaren Kunststoffteilen besteht, wobei der Aufbau gegebenenfalls noch zusätzlich Unter-, Ober- und/oder Zwischenschichten von Füllstoff- und insbesondere Verstärkungsmaterialien aufweisen kann. Der so beschaffene "Aufbau" wird einer thermoplastischen Formgebung unter solchen Temperatur- und Druckbedingungen zugeführt, daß gleichzeitig mit der thermoplastischen Verformung eine innige Vereinigung der einzelnen Schichten stattfindet, so daß ein stabiles Verbundsystem resultiert.

Die einzelnen Schichten des genannten aufbaus weisen im allgemeinen eine Dicke von 0,01 bis 10 mm, vorzugsweise 0,1 bis 5 mm, auf, wobei dies jedoch keineswegs ein bezüglich der Durchführbarkeit des Verfahrens kritisches Merkmal darstellt. Selbstverständlich wäre es auch möglich, nach dem erfindungsgemäßen Prinzip beispielsweise ein dickwandiges Kunststoffteil mit einer vergleichsweise dünnen Kunststoffschicht zu einem Verbundkörper zu vereinigen. Besonders bevorzugt dient das erfindungsgemäße Verfahren zur Herstellung von mehrschichtigen, gegebenenfalls Verstärkungsmaterialien eingebaut enthaltenden Kunststofflaminaten einer Dicke von 0,1 bis 30 mm, vorzugsweise 0,4 bis 10 mm.

Wesentlich ist bei dieser Variante des erfindungsgemäßen Verfahrens, daß zumindest eine, vorzugsweise mehrere und besonders bevorzugt alle der genannten zur Herstellung des "Aufbaus" verwendeten

5

Kunststoffmaterialien aus Polyisocyanat-Polyadditionsprodukten der erfindungswesentlichen Art bestehen, wobei die zur Herstellung des "Aufbaus" verwendeten Schichten aus erfindungswesentlichem Polyisocyanat-Polyadditionsprodukt ihrerseits bereits durch thermoplastische Formgebung entsprechend den obengemachten Ausführungen hergestellt werden können.

Im Falle der Verwendung von mehreren Schichten aus Polyisocyanat-Polyadditionsprodukten der genannten Art bei der Herstellung des der thermoplastischen Formgebung zuzuführenden "Aufbaus" ist es selbstverständlich nicht erforderlich, Polyisocyanat-Polyadditionsprodukte der gleichen chemischen Zusammensetzung miteinander zu kombinieren; es können vielmehr auch Polyisocyanat-Polyadditionsprodukte der genannten Art einer unterschiedlichen chemischen Zusammensetzung im Rahmen der gemach ten Ausführungen bei der Herstellung des "Aufbaus" verwendet werden.

Wie bereits ausgeführt, kann bei der Herstellung des "Aufbaus" das erfindungswesentliche Polyisocyanat-Polyadditionsprodukt nach einer thermoplastischen Vorbehandlung verwendet werden. Falls die Polyisocyanat-Polyadditionsprodukte jedoch ohne thermoplastische Vorbehandlung zur Herstellung des "Aufbaus" eingesetzt werden, wird vorzugsweise bereits bei ihrer Herstellung dafür Sorge getragen, daß sie flächenförmig anfallen. Hierunter sind beispielsweise platten- oder folienartige Polyisocyanat-Polyadditionsprodukte der genannten Art zu verstehen, wie sie beispielsweise nach der Reaktionsspritzgußtechnik unter Verwendung von Plattenformen oder dadurch erhalten werden können, daß man das die Mischapparatur verlassende Reaktionsgemisch flächenförmig auf geeignete Unterlagen, beispielsweise Bleche, unter Ausbildung von Flächengebilden aufträgt und ausreagieren läßt.

Im Falle einer thermoplastischen Vorbehandlung der Polyisocyanat-Polyadditionsprodukte können diese die unterschiedlichsten Formen aufweisen. So ist es beispielsweise möglich, Platten, die nach dem Prinzip der Reaktionsspritzgußtechnik in geschlossenen Plattenformen hergestellt worden sind, in Tiefziehpressen weiter zu verformen oder in zerkleinerter Form (Granulate oder Pulver) thermoplastisch zu Flächengebilden zu verarbeiten, um diese dann zur Herstellung des beim erfindungsgemäßen Verfahren einzusetzenden "Aufbaus" zu verwenden. Auf diese Weise können auch Granulate, Schnipsel, Steifen und/oder andere Klein- und Kleinstteile, wie sie beispielsweise bei der bislang erfolgten Herstellung und Verwendung von Formkörpern auf Basis der Polyisocyanat-Polyadditionsprodukte als Nebenprodukte bzw. Abfall anfielen und bislang verbrannt wurden, zu Flächengebilden verarbeitet werden, die dann zur Herstellung des beim erfindungsgemäßen Verfahren einzusetzenden "Aufbaus" verwendet werden.

Der "Aufbau" kann als weitere Kunststoffmaterialien beliebige, vorzugsweise flächenförmige, thermoplastisch verarbeitbare Kunststoffe aufweisen, Beispielsweise können zur Herstellung des "Aufbaus" platten- oder folienförmig vorliegende thermoplastische Polyurethane gemäß Stand der Technik, Polycarbonate, insbesondere auf Bisphenol A/Phosgen-Basis, Polyesterkunststoffe, beispielsweise gegebenenfalls Polyether-modifizierte Polyethylen- und/oder Polybutylen-terephthalate, Polyamide, Polyesteramide, Polyolefine wie Polyethylen oder Polypropylen, gegebenenfalls schlagzähmodifizierte Polystyrole, Polyacrylnitrile oder auch Mischpolymerisate wie beispielsweise Acrylnitril-Butadien-Styrol-Mischpolymerisate mitverwendet werden. Auch gegebenenfalls Harnstoffgruppen aufweisende Polyurethanelastomere, deren chemische Zusammensetzung den erfindungswesentlichen Polyisocyanat-Polyadditionsprodukten, von der eingesetzten Polyisocyanatkomponente abgesehen, entsprechen, können als weitere Kunststoffmaterialien bei der Herstellung des "Aufbaus" eingesetzt werden. Diese Polyurethanelastomere werden in Analogie zu den oben gemachten Ausführungen in Zusammenhang mit der Herstellung der erfindungswesentlichen Polyisocyanat-Polyadditionsprodukte hergestellt, wobei jedoch als Polyisocyanatkomponente aromatische Polyisocyanate verwendet werden, insbesondere solche der in EP-B-00 81 701, Kolonne 3, Zeile 30 bis Kolonne 4, Zeile 25, genannten Art.

Die Kunststoffmaterialien, die zur Herstellung des "Aufbaus" eingesetzt werden, insbesondere die erfindungswesentlichen Polyisocyanat-Polyadditionsprodukte können bereits Verstärkungs- oder Füllstoffmaterialien, beispielsweise Glas- oder Kohlefasern, Glasflakes, Wollastonit oder Mica enthalten. Darüber hinaus ist es möglich, bei der Herstellung des beim erfindungsgemäßen Verfahren einzusetzenden "Aufbaus" Unter-, Ober-und/oder Zwischenschichten aus verstärkend wirkenden Materialien mitzuverwenden.

Als derartige, verstärkend wirkende Schichten sind insbesondere Glasfaser- und/oder Kohlefaser-Matten unterschiedlichster Flächengewichte geeignet. Außerdem kommen beliebige Geflechte, Gewirke, Gestricke, Netze oder Siebe von vorzugsweise anorganischen Materialien wie Glas, Kohle, Kaliumtitanat, Stahl, Eisen, Aluminium oder Titan in Betracht.

Bei der Herstellung des beim erfindungsgemäßen Verfahren einzusetzenden "Aufbaus" können die einzelnen Kunststoffschichten und die gegebenenfalls vorliegenden Schichten aus verstärkend wirkenden Materialien in beliebiger Reihenfolge miteinander kombiniert werden, wobei es auch möglich ist, zunächst aus zwei oder mehreren Schichten, gegebenenfalls zunächst auch ohne erfin dungswesentliche Schicht aus

EP 0 348 760 A2

"Polyisocyanat-Polyadditionsprodukt", durch thermoplastische Vereinigung einen ersten Verbund herzustellen, und diesen dann mit weiteren Schichten zu einem "Aufbau" zu vereinigen und dem erfindungsgemäßen Verfahren zuzuführen. Der durch das Übereinanderlegen der einzelnen Schichten hergestellte "Aufbau" wird dann der thermoplastischen Formgebung zugeführt, wobei bezüglich der hierbei zu beachtenden Temperatur- und Druckbedingungen die bereits oben gemachten Ausführungen bezüglich der ersten Variante des erfindungsgemäßen Verfahren Gültigkeit haben. Die Durchführung des erfindungsgemäßen Verfahrens nach dieser zweiten Variante kann im übrigen in an sich bekannten Werkzeugen wie Formpressen, Kalandern oder Tiefziehpressen erfolgen.

Es kann bevorzugt sein, als Material für die äußerste Lage des Aufbaus eine Lage aus dem erfindungsgemäßen Material auf Basis (cyclo)aliphatischer Polyisocyanate, ganz besonders bevorzugt auf Basis von ausschließlich (cyclo)aliphatischer Reaktionskomponenten zu wählen, um die besonderen Vorteile des erfindungsgemäßen Materials bezüglich Lichtbeständigkeit und Einfärbbarkeit auch in hellen Tönen zur Geltung zu bringen.

Bei beiden Varianten des erfindungsgemäßen Verfahrens kann die thermoplastische Formgebung derart erfolgen, daß man das der thermoplastischen Formgebung zuzuführende Polyisocyanat-Polyadditionsprodukt bzw. den genannten "Aufbau" in ein Verformungswerkzeug einbringt, das auf die Temperatur, bei welcher die thermoplastische Formge bung erfolgt, erhitzt bzw. vorerhitzt wird. Die Erhitzung des Polyisocyanat-Polyadditionsprodukts bzw. des "Aufbaus" erfolgt dabei durch seinen Kontakt mit dem heißen Werkzeug.

Es ist jedoch nicht unbedingt erforderlich, das Verformungswerkzeug auf die bei der thermoplastischen Formgebung zur Anwendung gelangende Temperatur zu erhitzen, sonderen vielmehr ausreichend, wenn das der thermoplastischen Formgebung zuzuführende Polyisocyanat-Polyadditionsprodukt bzw. der genannte "Aufbau" vor dem Einbringen in das Verformungswerkzeug auf diese Temperatur vorerhitzt wird. Vorteilhaft ist hierbei, daß eine Erhitzung des Werkzeugs auf die Temperatur der thermoplastischen Formgebung nicht erforderlich ist, falls ein auf diese Temperatur vorerhitztes Polyisocyanat-Polyadditionsprodukt bzw. ein auf diese Temperatur vorerhitzter Aufbau in heißem Zustand, d.h. bei der Temperatur der thermoplastischen Formgebung befindlich in das Verformungswerkzeug eingebracht und sofort anschließend, d.h. vor seiner Abkühlung auf eine unterhalb der zur thermoplastischen Formgebung erforderlichen Temperatur liegenden Temperatur der thermoplastischen Formgebung unterzogen wird. Die Temperatur des Verformungswerkzeugs kann hierbei auch unterhalb der Temperatur liegen, bei welcher die thermoplastische Formgebung stattfindet. Vorzugsweise wird auf ein Erhitzen bzw. Vorerhitzen des Verformungswerkzeugs völlig verzichtet. Seine Temperatur liegt demzufolge vorzugsweise bei Raumtemperatur, d.h. bei ca. 15 bis 25° C.

Das erfindungsgemäße Verfahren gemäß erster Variante gestattet die Herstellung von beliebigen Formkörpern wie beispielsweise dreidimensionalen Hohlkörpern wie Gehäusen für Instrumente oder Becher, wobei als Ausgangsmaterialien Polyisocyanat-Polyadditionsprodukte der unterschiedlichsten Form oder auch "formlos" zum Einsatz gelangen können. Ein wesentlicher Vorteil ist hierbei, daß zur Herstellung dieser Formkörper eine Herstellung der Polyisocyanat-Polyadditionsprodukte in Formen, deren Formgestalt dem angestrebten Endprodukt entspricht, nicht erforderlich ist.

Gemäß zweiter Variante gestattet das erfindungsgemäße Verfahren die Herstellung von besonders hochwertigen Verbundkörpern, insbesondere Folienverbunden, die den unterschiedlichsten Verwendungszwecken zugeführt werden können. So eignen sich die erfindungsgemäßen Verbundkörper, beispielsweise in Form von Hohlkörpern, für Einsätze, Becher, Behälter verschiedener Abmessungen und Inhalte, als Abdeckungen für Armaturentafeln, Schaltkonsolen, für flächenförmige Fahrzeug-Karosserieelemente wie Türblätter, Seitenteile, Kotflügel oder Motorraum-und Kofferraumhauben, sowie Radkappen. In flächiger Form eignen sich die Verbundkörper auch für Schreibunterlagen, Anzeigetafeln mit Magnethalterungen, Klebeschildern, Schutzfolien und Beschichtungen für die verschiedensten Zwecke. Erfindungsgemäße Verfahrensprodukte können auch in Form von kleinen, bisher nach dem RIM-Verfahren nicht wirtschaftlich herstellbaren, Formteilen wie Tastaturelementen, hartelastischen Dichtungsteilen und Manschetten, Griffmulden und Griffkörpern, kleinen Dämpfungselementen, Unterleg- und Distanzscheiben Verwendung finden. Die erfindungsgemäßen Verfahrensprodukte können auch zur Herstellung von versteiften oder unversteiften Profilen für Kabelkanäle und Dichtungslippen oder zur Herstellung von beliebigen anderen, massiven kleinen Körpern verwendet werden. Gewünschtenfalls können in die Verbundkörper während ihrer Herstellung nach dem erfindungsgemäßen Verfahren Zusatzstoffe wie beispielsweise UV-Absorber oder Farbstoffe eingearbeitet werden.

In den nachfolgenden Beispielen beziehen sich alle Prozentangaben auf Gewichtsprozente.

EP 0 348 760 A2

Beispiel 1(Herstellung eines Polyisocyanat-Polyadditionsprodukts)

Die nachstehend genannte Rezeptur wurde wie folgt verarbeitet:

| | |
|---|---|
| Maschine: | Laborkolbendosiergerät |
| Form: | Plattenform aus Stahl der inneren Abmessung 300x200x4 mm |
| Mischkopf: | MQ 8 der Firma Hennecke, St. Augustin |
| Arbeitsdruck: | 180 bar |
| Einfüllzeit: | 1 sec |
| Rohstoff-Temperaturen: | 35 °C (A-Komponente) |
| | 30 °C (B-Komponente) |
| Formtemperatur: | 50 °C |
| Formstandzeit: | 30 sec |

Die Innenwände der Form wurden vor der Herstellung des Formkörpers mit einem handelsüblichen äußeren Formtrennmittel (RCTW der Fa. Chemtrend) beschichtet.

A-Komponente:

Abmischung von
70,5 Gew.-Teilen eines handelsüblichen, trifunktionellen Aminopolyethers der NH-Zahl 34 mit primären Aminogruppen (®Jeffamine T 5000 der Firma Texaco),
5,0 Gew.-Teilen eines handelsüblichen, trifunktionellen Aminopolyethers der NH-Zahl 387 mit primären Aminogruppen (®Jeffamine T 403 der Firma Texaco),
5,0 Gew.-Teilen Schwarzpaste N (Bayer AG),
15,0 Gew.-Teilen 4,4'-Diamino-3,3'-dimethyl-dicyclohexylmethan,
1,0 Gew.-Teil eines handelsüblichen Lichtschutzmittels (®Tinuvin 765 der Firma Ciba-Geigy),
2,0 Gew.-Teilen Phenyl-di-(decylphenyl)-phosphit,

B-Komponente:

Semiprepolymer aus 1-Isocyanato-3,3,5-trimethyl-5-isocyanatomethyl-cyclohexan und einem Polyethertriol der OH-Zahl 29, hergestellt durch Propoxylierung von Trimethylolpropan. Das NCO-Semiprepolymer wies einen NCO-Gehalt von 30 % auf.
Die Komponenten wurden im Gewichtsverhältnis A:B = 100:32 (entsprechend einer Kennzahl von 110) miteinander vermischt.

| Mechanische Daten: (Nachtemperung während 1,5 h bei 130 °C) | |
|---|---|
| Raumgewicht: | 1005 kg/m$^3$ |
| Zugfestigkeit (DIN 53 504): | 20 MPa |
| Bruchdehnung (DIN 53 504): | 160 % |
| G'-Modul (80°) (DIN 53 445): | 5 MPa |
| Zug-E-Modul RT (DIN 53 457): | 30 MPa |

Beispiele 2 bis 8: (erfindungsgemäßes Verfahren)

2. Alle Preßversuche wurden auf der Presse Modell 200 T, Fa. Schwabenthan bei 150 °C Preßtemperatur, 300 bar Preßdruck und 2 Minuten Preßzeit ausgeführt.
Laminate des Formkörpers gemäß Beispiel 1 mit sich selbst; folgender Aufbau:
P2: 2-fach Laminat aus Formkörper gemäß Beispiel 1
P4: 4-fach Laminat aus Formkörper gemäß Beispiel 1

8

P8: 8-fach Laminat aus Formkörper gemäß Beispiel 1

Aus zwei Platten der Dicke 4 mm wurde in einem Arbeitsgang das Laminat P2 der Dicke 2 mm hergestellt. Aus zwei Laminaten P2 wurde in einem weiteren Arbeitsgang das Laminat P4, Dicke ebenfalls 2 mm, und aus zwei Laminaten P4 das Laminat P8 der Dicke 2 mm hergestellt.

Die folgende Tabelle enthält einige charakteristische Materialdaten dieser Laminate:

| | Ausgangsmaterial | P2 | P4 | P8 |
|---|---|---|---|---|
| | | Laminat | | |
| Zugfestigkeit DIN 53 504 | 20 MPa | 19 MPa | 22 MPa | 20 MPa |
| Bruchdehnung DIN 53 504 | 160 % | 160 % | 160 % | 220 % |
| G'-Modul (80°) DIN 53 445 | 5 MPa | 3 MPa | 2 MPa | 2 MPa |
| Zug-E-Modul RT DIN 53 457 | 30 MPa | 10 MPa | 8 MPa | 10 MPa |

3. Ausgehend von einer Platte des Formkörpers gemäß Beispiel 1 der Dicke 4 mm und einem feinmaschigen Drahtnetz, Drahtstärke 100 μm, wurde durch Einpressen des Formkörpers in das Drahtnetz gemäß dem erfindungsgemäßen Verfahren (bei 200 bar Druck, 150°C für die Dauer von 2 min) ein plattenförmiger Aufbau hergestellt. Der Aufbau hatte eine Dicke von 3 mm.

4. Aus einem Aufbau gemäß Beispiel 3 wurde ein Becher der Tiefe 40 mm, des Durchmessers 35 mm und der Wandstärke 3 mm hergestellt; Preßparameter wie in Beispiel 3. Die überstehenden Materialstücke wurden abgeschnitten.

5. Aus zwei Platten des Formkörpers gemäß Beispiel 1 der Dicke 4 mm und einer Platte aus einem Polyharnstoff-Elastomeren auf Basis von aromatischen Ausgangsmaterialien gemäß Stand der Technik (®Bayflex 150 der Bayer AG) der Dicke 4 mm wurde in einem Arbeitsgang ein Dreifachlaminat, d.h. eine obere und eine untere Deckschicht auf das Bayflex 150 auflaminiert. Das Laminat hatte eine Enddicke von 3 mm; Preßparameter: Druck 250 bar, Temperatur 150°C, Preßzeit 2 min.

Das Laminat hatte eine Reißdehnung von 80 und eine Reißfestigkeit von 18 MPa.

6. Analog Beispiel 3, jedoch grobes Metallsieb, Metalldrahtstärke 1 mm; Parameter wie in Beispiel 3. Laminat hat Oberfläche wie PUR, d.h. "weichen Griff"; jedoch mechanische Eigenschaften wie Metallsieb.

7. Ausgehend von 2 Platten des Formkörpers gemäß Beispiel 1 der Dicke 4 mm und dem feinmaschigen Drahtnetz gemäß Beispiel 3 wurde ein dreischichtiger, plattenförmiger Aufbau der Dicke 3 mm hergestellt. Preßparameter wie in Beispiel 3.

Der Aufbau hat eine Reißdehnung von 40 % und eine Reißfestigkeit von 10 MPa; der Zug-E-Modul bei Raumtemperatur betrug: 120 MPa.

8. Analog Beispiel 5, jedoch statt des Bayflex 150 wurde ein Aluminium-Lochblech der Dicke 1 mm verwendet. Auch hierbei entsteht ein Aufbau, der die PUR-Oberfläche mit den mechanischen Eigenschaften des Aluminium-Lochblechs verbindet.

## Ansprüche

1. Verfahren zur Herstellung von Formkörpern oder Folien auf Basis von Polyisocyanat-Polyadditionsprodukten einer Dichte von mindestens 0,8 g/cm³ durch thermoplastische Formgebung bei oberhalb 20°C liegenden Temperaturen und bei oberhalb 1 bar liegenden Drücken, dadurch gekennzeichnet, daß man als Polyisocyanat-Polyaddditionsprodukte solche verwendet, die durch Umsetzung von

a) (cyclo)aliphatischen Polyisocyanaten,

b) Verbindungen mit einem Molekulargewicht von 1.800 bis 12.000, welche im statistischen Mittel mindestens 2,5 gegenüber Isocyanatgruppen reaktionsfähige Gruppen aufweisen, gegebenenfalls

c) Diaminen mit zwei primären und/oder sekundären, aromatisch gebundenen Aminogruppen des Molekulargewichtsbereichs 108 bis 400, sowie gegebenenfalls

d) gegebenenfalls Ethergruppen aufweisenden (Cyclo)-alkanpolyolen und/oder (Cyclo)-alkanpolyaminen des Molekulargewichtsbereichs 60 bis 1799, sowie gegebenenfalls unter Mitverwendung von

e) den aus der Polyurethanchemie an sich bekannten Hilfs- und Zusatzmitteln, unter Einhaltung einer Isocyanatkennzahl von 60 bis 140 im Ein- oder Mehrstufenverfahren hergestellt worden sind mit der Maßgabe, daß mindestens eine der Komponenten c) und/oder d) in einer solchen Menge mitverwendet wird, daß die Gesamtmenge der Komponenten c) und/oder d) mindestens 5 Gew.-%, bezogen auf das Gewicht der Komponente b), beträgt.

2. Verfahren gemäß Anspruch 1, dadurch gekennzeichnet, daß man die thermoplastische Formgebung bei Temperaturen von 100 bis 200 °C und Drücken von 20 bis 400 bar durchführt.

3. Verfahren gemäß Anspruch 1 und 2, dadurch gekennzeichnet, daß die der thermoplastischen Formgebung zuzuführenden Polyisocyanat-Polyadditionsprodukte Füll- und/oder Verstärkungsstoffe in einer Menge von bis zu 80 Gew.-%, bezogen auf das Gesamtgewicht, enthalten.

4. Verfahren gemäß Anspruch 1 bis 3, dadurch gekennzeichnet, daß die der thermoplastischen Formgebung zuzuführenden Polyisocyanat-Polyadditionsprodukte in Form von Granulat, Schnipseln, Streifen und/oder anderen Klein- und Kleinstteilen vorliegen.

5. Verfahren gemäß Anspruch 1 bis 3, dadurch gekennzeichnet, daß man die der thermoplastischen Formgebung zuzuführenden Polyisocyanat-Polyadditionsprodukte auf die Temperatur der thermoplastischen Verarbeitung vorerhitzt und in heißem Zustand in das zur thermoplastischen Formgebung benutzte Verformungswerkzeug einbringt.

6. Verfahren gemäß Anspruch 1 bis 3, dadurch gekennzeichnet, daß man vor der thermoplastischen Formgebung einen Aufbau, bestehend aus mindestens zwei schichtweise übereinanderliegenden, flächenförmigen, thermoplastisch verformbaren Kunststoffmaterialien und gegebenenfalls mindestens einer Ober-, Unter- und/oder Zwischenschicht aus einem Verstärkungs- oder Füllstoffmaterial, herstellt, wobei mindestens eine der Kunststoffmaterialien ein Polyisocyanat-Polyadditionsprodukt der in Anspruch 1 genannten Art darstellt, und anschließend die thermoplastische Formgebung unter solchen Temperatur-und Druckbedingungen durchführt, daß gleichzeitig eine innige Vereinigung der einzelnen Schichten des Aufbaus stattfindet.

7. Verfahren gemäß Anspruch 6, dadurch gekennzeichnet, daß es sich bei den Kunststoffmaterialien ausschließlich um gleiche oder verschiedene Polyisocyanat-Polyadditionsprodukte der in Anspruch 1 genannten Art handelt.

8. Verfahren gemäß Anspruch 6 und 7, dadurch gekennzeichnet, daß die flächenförmigen Kunststoffmaterialien eine Dicke von 0,01 bis 10 mm aufweisen und, gegebenenfalls im Verbund mit verstärkend wirkenden Ober-, Unter- und/oder Zwischenschichten aus Verstärkungsmaterialien, zu Laminaten einer Dicke von 0,1 bis 30 mm verpreßt werden.

9. Verfahren gemäß Anspruch 6 bis 8, dadurch gekennzeichnet, daß man den Aufbau auf die Temperatur der thermoplastischen Verarbeitung vorerhitzt und in heißem Zustand in das zur thermoplastischen Formgebung benutzte Verformungswerkzeug einbringt.

10. Gemäß Anspruch 1 bis 9 erhaltene Formkörper.